# EUROPEAN PATENT APPLICATION

(11) **EP 4 763 560 A2**
(43) Date of publication of application: **24.06.2026**
(21) Application number: 25210639.8
(22) Date of filing: 23.10.2025
(51) Int. Cl.: B60K 1/04, B60K 15/063, B60K 15/067

(54) **STORAGE TANK MOUNTING FOR HYBRID MINING TRUCKS**

(30) Priority: 01.11.2024 US 202418934976
(71) Applicant: Cummins, Inc., Columbus, Indiana 47201 (US)
(72) Inventor: Richards, Kieran, West Haddon, NN6 7ET (GB)
(74) Representative: Cleveland Scott York

(57) **Abstract**

A support structure for a mining truck can include an interior mounting interface. The interior mounting interface can be configured to removably attach the support structure to a chassis of the mining truck. The support structure can further include a center mounting interface. The center mounting interface can be configured to support an interior storage tank adjacent to the chassis. The support structure can further include an exterior mounting interface. The exterior mounting interface can be configured to support an exterior storage tank adjacent to the interior storage tank.

## Description

### TECHNICAL FIELD OF THE PRESENT DISCLOSURE

The present disclosure relates to architectures, or component arrangement, of hybrid mining trucks. In particular, the present disclosure relates to mounting storage tanks to a hybrid mining truck.

### BACKGROUND OF THE PRESENT DISCLOSURE

Environmental and efficiency considerations have resulted in the electrification of vehicles across industries and purposes. While electric and hybrid passenger and cargo vehicles are becoming more commonplace, electrification and/or hybridization of large equipment vehicles poses its own set of challenges. For example, large equipment vehicles, such as mining trucks, cranes, bulldozers, etc., may require a workload and/or have a sheer size component that makes implementation of alternative powertrains more difficult. Additionally, the components required for hybridization and/or electrification of such vehicles may be difficult to arrange due to the space available relative to the respective vehicle for mounting such components.

### SUMMARY OF THE DISCLOSURE

The present disclosure provides a support structure for a mining truck. The support structure includes an interior mounting interface configured to removably attach the support structure to a chassis of the mining truck; a center mounting interface configured to support an interior storage tank adjacent to the chassis; and an exterior mounting interface configured to support an exterior storage tank adjacent to the interior storage tank. In another embodiment, the interior mounting interface includes an interior pivot axis about which the support structure is pivotable relative to the chassis. The center mounting interface includes a center pivot axis about which the interior storage tank is pivotable relative to the support structure; and the exterior mounting interface includes an exterior pivot axis about which the exterior storage tank is pivotable relative to the support structure. Further, each of the interior mounting interface, the center mounting interface, and the exterior mounting interface is pivotable independently of each other. In another embodiment, each of the interior mounting interface, the center mounting interface, and the exterior mounting interface includes a damping portion having one or more vibration dampers.

In yet another embodiment, the support structure includes an upper beam extending between the interior mounting interface and the exterior mounting interface. The upper beam includes a channel having a first end and a second end; the interior mounting interface includes an interior bar member attached to the first end; and the exterior mounting interface includes an exterior bar member attached to the second end. Further, a first portion of the upper beam overlaps a portion of the interior bar member; and a second portion of the upper beam overlaps a portion of the exterior bar member. Additionally, the interior bar member and the exterior bar member are welded to the upper beam.

In another embodiment of the support structure, one of the interior storage tank and the exterior storage tank includes a hydraulic fluid storage tank. In yet another embodiment, one of the interior storage tank and the exterior storage tank includes at least one of a fuel tank, a battery module, and a flywheel.

The present disclosure further provides a storage tank assembly for a mining truck, the storage tank assembly including a support structure pivotably coupled to a chassis of the mining truck; an interior storage tank supported by and pivotably coupled to the support structure; and an exterior storage tank supported by and pivotably coupled to the support structure. The interior storage tank is pivotable relative to the support structure independently of the exterior storage tank. The exterior storage tank is pivotable relative to the support structure independently of the interior storage tank. In another embodiment of the storage tank assembly, the interior storage tank is vibrationally isolated from the support structure. In yet another embodiment, the exterior storage tank is vibrationally isolated from the support structure.

In another embodiment, the storage tank assembly includes one or more vibration dampers between at least one of: the support structure and the chassis; the interior storage tank and the support structure; and the exterior storage tank and the support structure. In a different embodiment, the support structure includes a crossbar defining a pivot axis about which the support structure is configured to pivot, the crossbar received between a chassis mounting post of the chassis and a clamping member coupled to the chassis mounting post so that the crossbar is freely rotatable.

The present disclosure also provides a method of mounting a first storage tank and a second storage tank to a chassis of a mining truck. The method includes mounting a support structure to a mounting post of the chassis of the mining truck; mounting a pre-existing storage tank to a center mounting interface of the support structure; and mounting a second storage tank to an exterior mounting interface of the support structure so that the second storage tank is positioned adjacent to the pre-existing storage tank. In another embodiment, the support structure is pivotably mounted to the mounting post of the chassis by an interior mounting interface about a first pivot axis; the pre-existing storage tank is pivotable relative to the chassis about a second pivot axis; and the second storage tank is pivotable relative to the chassis about a third pivot axis. Further, the pre-existing storage tank is pivotable independently of the second storage tank and the second storage tank is pivotable independently of the pre-existing storage tank.

In another embodiment of the method, the pre-existing storage tank is cylindrical. In yet another embodiment, mounting the support structure includes receiving a crossbar of the support structure between the mounting post of the chassis and a clamping member so that the crossbar is freely rotatable. In a different embodiment, mounting the pre-existing storage tank includes receiving a portion of the pre-existing storage tank within a slot defined by a support tab of the support structure and coupling a clamping member to the support tab so that the portion of the pre-existing storage tank is positioned between the support tab and the clamping member.

While multiple embodiments are disclosed, still other embodiments of the present disclosure will become apparent to those skilled in the art from the following detailed description, which shows and describes illustrative embodiments of the disclosure. Accordingly, the drawings and detailed description are to be regarded as illustrative in nature and not restrictive.

### BRIEF DESCRIPTION OF THE DRAWINGS

The detailed description of the drawings particularly refers to the accompanying figures in which:
FIG. **1** is a schematic top-down illustration of an architecture arrangement of components of a mining truck, in accordance with embodiments of the present disclosure;
FIG. **2** is a perspective view illustration of an exemplary chassis and components mounted thereon, in accordance with embodiments of the present disclosure;
FIG. **3** illustrates a schematic top-down illustration of another architecture arrangement of components of a mining truck, in accordance with embodiments of the present disclosure;
FIG. **4** illustrates a schematic side view illustration of the architecture arrangement of FIG. **3****,** in accordance with embodiments of the present disclosure;
FIG. **5** illustrates a second schematic side view illustration of the architecture arrangement of FIG. **3****,** in accordance with embodiments of the present disclosure;
FIG. **6** illustrates a top-down schematic illustration of another architecture arrangement of components of a mining truck, in accordance with embodiments of the present disclosure;
FIG. **7A** illustrates a storage tank assembly, in accordance with embodiments of the present disclosure;
FIG. **7B** illustrates a plan view of the storage tank assembly of FIG. 7A, in accordance with embodiments of the present disclosure;
FIG. **8** illustrates a plan view of a support structure, in accordance with embodiments of the present disclosure;
FIG. **9A** illustrates a storage tank mounted to a support structure, in accordance with embodiments of the present disclosure;
FIG. **9B** illustrates an additional view of FIG. 9A, in accordance with embodiments of the present disclosure;
FIG. **10** illustrates an isometric view of a support structure, in accordance with embodiments of the present disclosure;
FIG. **11** illustrates a portion of a support structure, in accordance with embodiments of the present disclosure;
FIG. **12** illustrates a portion of a support structure, in accordance with embodiments of the present disclosure;
FIG. **13** illustrates a portion of a support structure, in accordance with embodiments of the present disclosure; and
FIG. **14** illustrates an exterior bar member of a support structure, in accordance with embodiments of the present disclosure.

Although the drawings represent embodiments of various features and components according to the present disclosure, the exemplification set out herein illustrates an embodiment, and such an exemplification is not to be construed as limiting the scope of the disclosure in any manner.

### DETAILED DESCRIPTION OF THE DRAWINGS

The present disclosure relates to architectures, or component arrangement, of hybrid mining trucks; more particular aspects relate to a mounting frame for a hybrid mining truck.

As noted above, in view of environmental and efficiency considerations, there are efforts to electrify and/or hybridize large equipment vehicles (e.g., mining trucks, cranes, bulldozers). The size and workload of such vehicles can present a variety of challenges to alternative powertrain configurations. In some instances, the work environment of such vehicles can include high temperatures and rugged terrain, which can challenge the durability of vehicle components, particularly with respect to vibration damage. Additionally, some design configurations, such as those including retrofitting an internal-combustion-powered mining truck for hybrid or electric-powered operation, can have a limited available space for installing and/or rearranging components.

To address these and other challenges, embodiments of the present disclosure include a chassis-mountable support structure for a mining truck. Embodiments of the present disclosure can provide additional storage capacity adjacent to an existing storage tank of a mining truck. Embodiments of the present disclosure can further obviate or minimize retrofit modifications to the storage tank and to the location of the storage tank on the mining truck. In this way, embodiments of the present disclosure can facilitate efficiently retrofitting an existing mining truck for increased storage capacity. In an example, embodiments of the present disclosure can provide additional storage capacity for an internal-combustion-powered mining truck being retrofitted for hybrid or electric-powered operation. Embodiments of the present disclosure can further provide a durable support structure that can have a relatively high strength-to-weight ratio. In an example, the support structure can be configured to vibrationally isolate an interior storage tank and an exterior storage tank from the chassis of the mining truck; vibrationally isolate the interior storage tank from the support structure; and vibrationally isolate the exterior storage tank from the support structure. In an additional example, the support structure can provide a beneficial strength-to-weight ratio by including bar portions and channel portions. Such embodiments can improve durability by reducing a likelihood of vibration damage to one or more components of the mining truck.

For the purposes of promoting an understanding of the principles of the present disclosure, reference will now be made to the embodiments illustrated in the drawings, which are described herein. The embodiments disclosed herein are not intended to be exhaustive or to limit the invention to the precise form disclosed. Rather, the embodiments are chosen and described so that others skilled in the art may utilize their teachings. Therefore, no limitation of the scope of the claimed invention is thereby intended. The present invention includes any alterations and further modifications of the illustrated devices and described methods and further applications of principles in the invention which would normally occur to one skilled in the art to which the invention relates.

The terms "couples," "coupled," "coupler," and variations thereof are used to include both arrangements wherein the two or more components are in direct physical contact and arrangements wherein the two or more components are not in direct contact with each other (e.g., the components are "coupled" via at least a third component), but yet still cooperate or interact with each other.

In some instances throughout this disclosure and in the claims, numeric terminology, such as first, second, third, fourth, etc., is used in reference to various components of features. Such use is not intended to denote an ordering of the components or features. Rather, numeric terminology is used to assist the reader in identifying the components or features being referenced and should not be narrowly interpreted as providing a specific order of components or features.

While the disclosure herein is provided in terms of a "mining truck", it is understood that the features described herein may apply to other vehicles, including heavy equipment such as cranes, bulldozers, excavators, etc., locomotives, and other appropriate vehicles.

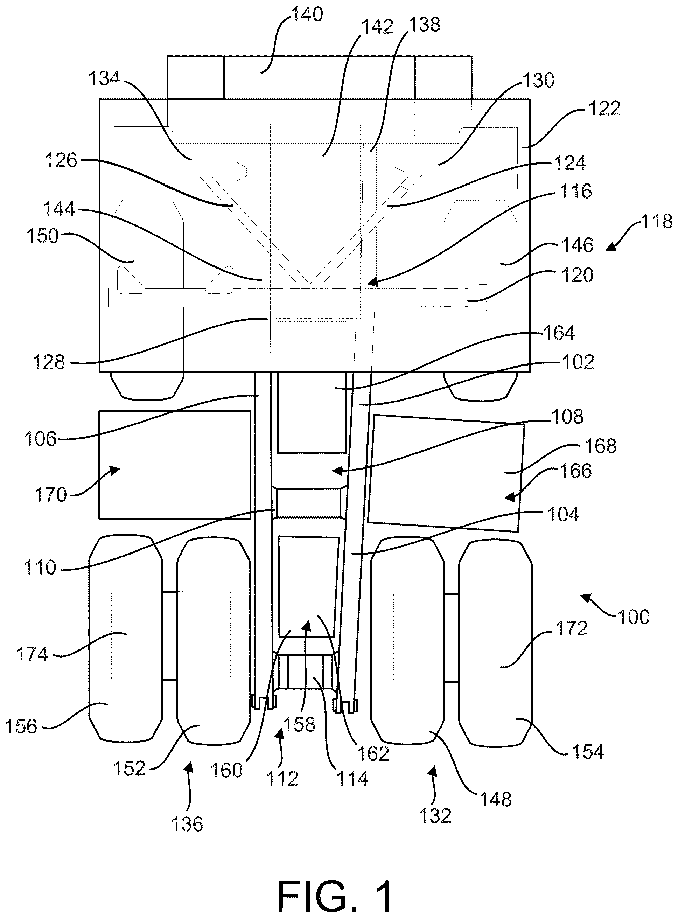

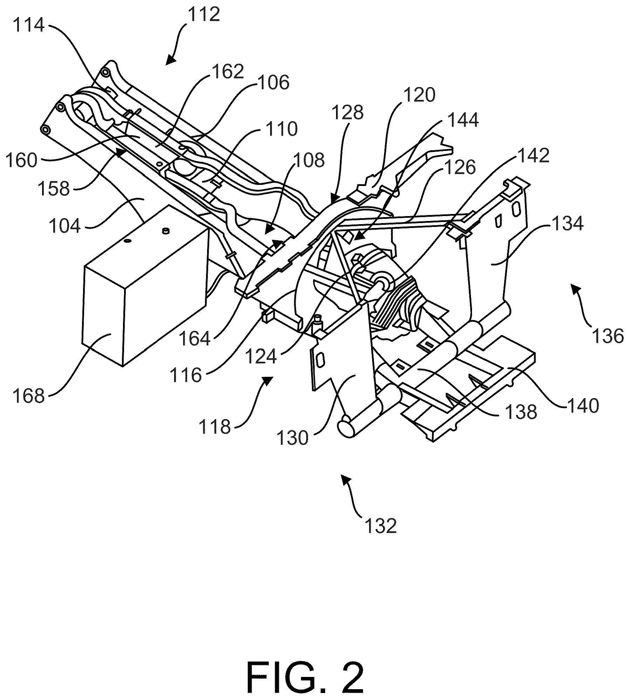

A schematic architecture of an exemplary mining truck **100** is illustrated in FIG. **1****.** As shown, mining truck **100** may be generally built on and/or around chassis **102.** Referring additionally to FIG. **2****,** chassis **102** may include a first frame member **104** and a second frame member **106** extending longitudinally from a first end portion of the chassis, including a first end of the chassis, to a second end portion of the chassis, including a second end of the chassis, to at least partially define a length of mining truck **100.** First frame member **104** and second frame member **106** may be spaced apart to form a space **108** therebetween, with a central crossbeam **110** extending from first frame member **104** to second frame member **106** across space **108,** generally defining a rear chassis region **112.** A rear crossbeam **114** extends from first frame member **104** to second frame member **106** across space **108** at the rear of chassis **102,** and a horse collar **116** may connect first frame member **104** and second frame member **106** within a forward region **118** of chassis **102.**

A third frame member **120** may extend across the top of horse collar **116** and beyond the diameter of horse collar **116** to form a support for a deck **122** (FIG. **1**) as described further herein. A first supplemental frame member **124** and a second supplemental frame member **126** may each extend diagonally from a central portion **128** of third frame member **120** above horse collar **116.** First supplemental frame member **124** and second supplemental frame member **126** may extend in opposite directions. First supplemental frame member **124** may connect to a first support plate **130,** and second supplemental frame member **126** may connect to a second support plate **134.** First support plate **130** may also connect to first frame member **104** on a first side **132** of chassis **102,** and second support plate **134** may also connect to second frame member **106** on a second side **136** of chassis **102.**

A forward crossbeam **138** may extend from first frame member **104** to second frame member **106** in general alignment with first support plate **130** and second support plate **134.** A support extension **140** may extend forward of forward crossbeam **138.** An engine **142** may be positioned within an opening **144** defined by horse collar **116.** A traction alternator and/or gearbox may be mounted rearward of engine **142** within area **164.**

Referring again to FIG. **1****,** wheels **146, 148, 150,** and **152** may be mounted to chassis **102** via respective axles (not shown). For example, as shown, first wheel **146** may be mounted at a forward position in forward region **118** on first side **132** of chassis **102.** Second wheel **148** may be mounted at a rearward position in rear chassis region **112** on first side **132** of chassis **102.** Third wheel **150** may be mounted at a forward position in forward region **118** on second side **136** of chassis **102.** Fourth wheel **152** may be mounted at a rearward position in rear chassis region **112** on second side **136** of chassis **102.** In some embodiments, mining truck **100** may include a fifth wheel **154** mounted adjacent to second wheel **148** at a rearward position in rear chassis region **112** on first side **132** of chassis **102.** Some embodiments may additionally include a sixth wheel **156** mounted adjacent to fourth wheel **152** at a rearward position in rear chassis region **112** on second side **136** of chassis **102.** First wheel **146** and third wheel **150** may be mounted at a position generally corresponding to third frame member **120.**

A rear region space **158** defined between first frame member **104** and second frame member **106** within rear chassis region **112,** and at least partially defined between second wheel **148** and fourth wheel **152,** may be sized and shaped to receive a vehicle subsystem **160.** For example, as shown in FIG. **2****,** vehicle subsystem **160** may include an aftertreatment system **162.** In other embodiments, vehicle subsystem **160** may include a battery module, a fuel tank, a powertrain support subsystem, an exhaust muffler, an exhaust silencer, or any other vehicle subsystems necessary or otherwise desired for operation of mining truck **100.** As described herein, an exhaust muffler and an exhaust silencer may be similar or the same components intended to quiet an exhaust by some volume. In other embodiments, rear region space **158** may be free of any vehicle subsystems or components.

First wheel **146** and second wheel **148** may define a space, or first side saddle **166** therebetween. In some embodiments, as illustrated in FIGS. **1-2****,** a fuel tank **168** may be mounted to chassis **102** within first side saddle **166.** Fuel tank **168** may contain, for example, diesel fuel or an alternative fuel, e.g., ammonia, methanol, ethanol, or other fuels suitable of operation of mining truck **100.** Likewise, third wheel **150** and fourth wheel **152** may define a space, or second side saddle **170.** A first wheel motor **172** may be associated with second wheel **148** and, in embodiments including a fifth wheel, fifth wheel **154.** A second wheel motor **174** may be associated with fourth wheel **152** and, in embodiments including a sixth wheel, sixth wheel **156.** In some embodiments including a fifth and/or sixth wheel, each of second wheel **148,** fourth wheel **152,** fifth wheel **154,** and sixth wheel **156** may have a separate wheel motor. In other embodiments, all of wheels **146, 148, 150, 152, 154,** and **156** or wheels **146, 148, 150, 152,** or any combination thereof, may be associated with a wheel motor, whether such wheel motor is designated to a single wheel or such wheel motor is shared between two or more wheels.

Still referring to FIG. **1****,** deck **122** may be supported by chassis **102,** and, for example, by third frame member **120,** first support plate **130,** and second support plate **134.** In other words, deck **122** may be supported by the first end portion of chassis **102,** wherein the first end of portion of chassis **102** includes a first end of chassis **102.** Deck **122** may be configured to support a cab to facilitate operation of mining truck **100** and various vehicle subsystems, including hybrid powertrain subsystems and components as discussed further herein.

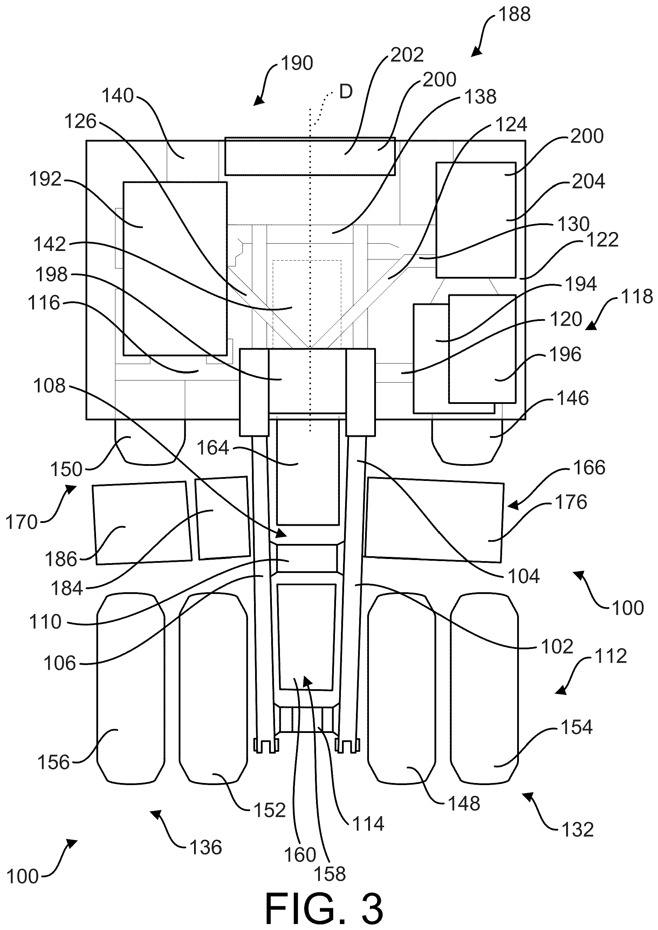

Now referring to FIGS. **3-5****,** a second exemplary architecture for mining truck **100** is illustrated. Mining truck **100** as illustrated in FIG. **3-5** includes the same components and details as described in relation to FIGS. **1** and/or **2** except as described further herein, with like components associated with like reference numbers.

As described above, mining truck **100** may include chassis **102** having first frame member **104** and second frame member **106.** First wheel **146** may be mounted at a forward position in forward region **118** on first side **132** of chassis **102,** i.e., adjacent to first frame member **104.** Second wheel **148** may be mounted at a rearward position in rear chassis region **112** on first side **132** of chassis **102,** i.e., adjacent to first frame member **104,** and spaced apart from first wheel **146** to define first side saddle **166** therebetween. A battery pack module **176** may be mounted to first side **132** of chassis **102** within first side saddle **166.**

Battery pack module **176** may be configured to store power for use in operation of mining truck **100.** In hybrid applications, battery pack module **176** may cooperate with engine **142** to provide power to wheels **146, 148, 150, 152** and, in some embodiments, wheels **154, 156** for movement of mining truck **100.** Battery pack module **176** may be mounted within first side saddle **166** at a position which mitigates potential contact of any one of wheels **146, 148, 150, 152, 154** (when present) and/or **156** (when present).

Mounting of battery pack module **176** within first side saddle **166** may facilitate an even balance of mining truck **100** when one or more tanks are also mounted to chassis **102** within second side saddle **170** as discussed further herein. This placement may also maximize space for battery positioning while allowing the batteries to be put in a single, unified space rather than distributed in several places over the architecture of mining truck **100.** For example, in some embodiments, battery pack module **176** may include a plurality of battery pack layers in a vertical arrangement, where each battery pack layer of the plurality of battery pack layers includes one or more battery packs. This vertical arrangement of battery packs as positioned in a side saddle may take advantage of a height of mining truck **100** to include as many battery packs as necessary for efficient operation of mining truck **100** in a hybrid operation mode. While these benefits are acknowledged, it is also within the scope of this disclosure that battery pack module **176** and/or a plurality of battery packs may be alternately positioned, whether in a single, unified space (i.e., on deck **122,** within rear region space **158,** or another placement), or in a plurality of places throughout the architecture of mining truck **100.**

Referring again to FIGS. **3-5****,** a hydraulic liquid tank **184** may be mounted to second side **136** of chassis **102** within second side saddle **170.** Hydraulic liquid tank **184** may serve as a reservoir for containing excess hydraulic fluid for operation of mining truck **100** and/or serve to hold a supply of hydraulic fluid for operation of mining truck **100.** A second liquid tank **186** is mounted to chassis **102** within second side saddle **170.** In some embodiments, second liquid tank **186** may be a fuel tank.

As illustrated, hydraulic liquid tank **184** may be mounted to chassis **102** at an interior position of second side saddle **170,** while second liquid tank **186** may be mounted to chassis **102** at an exterior position of second side saddle **170,** so that hydraulic liquid tank **184** is substantially in-between the chassis and the second liquid tank **186.** In other embodiments, hydraulic liquid tank **184** and second liquid tank **186** may be alternately arranged. For example, in some embodiments, second liquid tank **186** may be mounted to chassis **102** at an interior position of second side saddle **170,** while hydraulic liquid tank **184** may be mounted to chassis **102** at an exterior position of second side saddle **170.** In yet other embodiments, hydraulic liquid tank **184** and second liquid tank **186** may both be arranged at a generally interior position of second side saddle **170** so that one of hydraulic liquid tank **184** and second liquid tank **186** is positioned at a forward position near third wheel **150,** and the other of the hydraulic liquid tank **184** and second liquid tank **186** is positioned at a rearward position near fourth wheel **152.** In some embodiments, a third liquid tank, for example, a second fuel tank, may be mounted to the chassis **102** within the second side saddle **170.** In other embodiments, the second fuel tank may be mounted to chassis **102** within the first side saddle **166** in place of or in tandem with battery pack module **176.**

Although the embodiments described above include mounting of battery pack module **176** within first side saddle **166** with hydraulic liquid tank **184** and second liquid tank **186** mounted within second side saddle **170,** other arrangements may be considered that also enjoy at least some of the advantages discussed above. For example, in some embodiments, battery pack module **176** may be mounted within second side saddle **170** adjacent to hydraulic liquid tank **184** while second liquid tank **186** is mounted to chassis **102** within first side saddle **166.** In other embodiments, hydraulic liquid tank **184** may remain in second side saddle **170,** second liquid tank **186** may be mounted to chassis **102** within first side saddle **166,** and battery pack module **176** may be mounted to deck **122.**

Rear region space **158** defined by chassis **102** between second wheel **148** and fourth wheel **152** may include a vehicle subsystem **160** mounted therein, such as an aftertreatment system, a heating system for a bed of mining truck **100,** and/or an exhaust muffler. In some embodiments, rear region space **158** may remain empty of any vehicle subsystems. It is within the scope of the disclosure that other subsystems beyond those listed explicitly herein may be mounted within rear region space **158.**

As discussed above, deck **122** may be supported at a forward position by chassis 102. Deck **122** may include a first region **188** associated with a first side of deck **122** corresponding with first side **132** of chassis **102** and a second region **190** associated with a second side of deck **122** corresponding with second side **136** of chassis **102.** First region and second region are illustrated by dividing line **"D".** An operator cab **192** may be arranged within second region **190** of deck **122.** Operator cab **192** is configured to house an operator during operation of mining truck **100,** along with controls necessary or desired for said operation of mining truck **100.**

A resistor grid **194** may be arranged within first region **188** of deck **122** and may be positioned at a generally rearward position of first region **188** of deck **122.** A DC/DC system **196** may be positioned on top of resistor grid **194** so that DC/DC system **196** and resistor grid **194** are in a vertically stacked arrangement. An inverter cabinet **198** may be positioned at least partially in first region **188** of deck **122** and at least partially in second region **190** of deck **122.** For example, inverter cabinet **198** may be equally positioned in first region **188** and second region **190** or, in some embodiments, be positioned so that a majority of inverter cabinet **198** is in first region **188.** In other embodiments, inverter cabinet **198** may be positioned so that a majority of inverter cabinet **198** is in second region **190.** As illustrated, inverter cabinet **198** may be positioned at within a rear portion of deck **122.** The positioning of inverter cabinet **198** in this manner may provide an open area for positioning of additional mining truck components, for example, as described further herein.

Still referring to FIGS. **3-5****,** mining truck **100** may further include a thermal management system **200.** Thermal management system **200** may include a radiator **202** and a DC/DC-battery thermal manager **204.** In some embodiments, radiator **202** and DC/DC-battery thermal manager **204** may be integrated, i.e., one thermal management component may serve as both radiator **202** and DC/DC-battery thermal manager **204.** In other embodiments, radiator **202** may service both engine **142** and DC/DC system **196,** while DC/DC-battery thermal manager **204** only services battery pack module **176.**

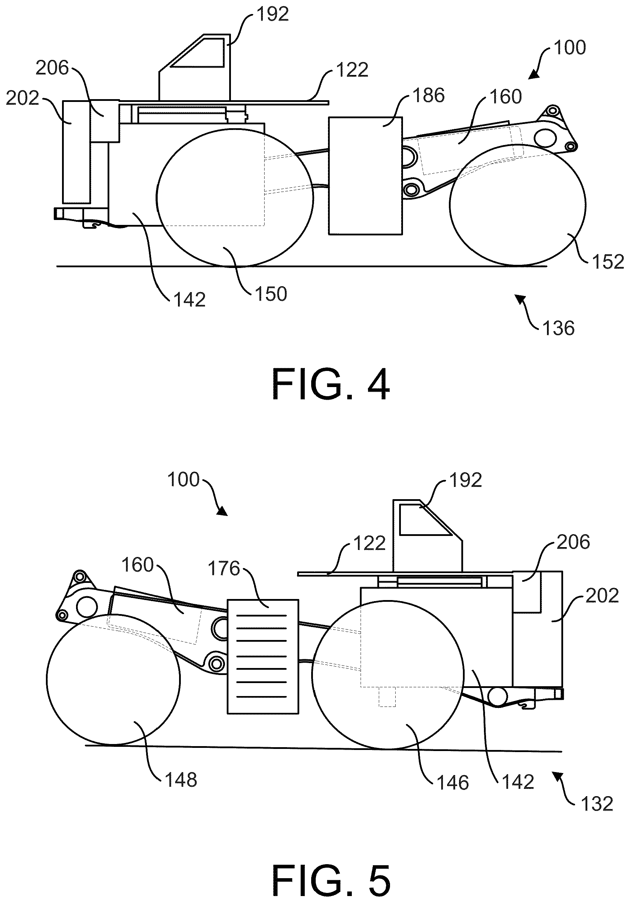

As illustrated, radiator **202** may be mounted to a front of mining truck **100,** or, in other words, at a full forward position relative to deck **122.** For example, radiator may be mounted at the first end portion of chassis **102** adjacent the first end of chassis **102.** In some embodiments, radiator **202** may be, at least in part, mounted to a forward edge of deck **122** so that radiator **202** extends downward from deck **122.** In other embodiments, radiator **202** may be mounted to a front of mining truck **100** below deck **122.** In yet other embodiments, radiator **202** may be mounted at another position of mining truck **100.** Referring specifically to FIGS. **4-5****,** an air cleaner **206** may be integrated with or positioned immediately adjacent to radiator **202** between radiator **202** and engine **142** to mitigate the presence of dirt, dust, and other contaminants within engine **142,** mounted within horse collar **116** of chassis **102.**

DC/DC-battery thermal manager **204** may be positioned on deck **122** within first region **188** at a forward position of resistor grid **194** and/or DC/DC system **196.** DC/DC-battery thermal manager **204** is configured to be fluidly coupled to battery pack module **176** provide coolant or refrigerated liquid to battery pack module **176,** and, in some embodiments, may be fluidly coupled to DC/DC/ system **196** to provide thermal management services to DC/DC system **196.**

The arrangement of components on the deck as described herein are exemplary in nature and may be altered within the scope of the disclosure. For example, in some embodiments, first region **188** and second region **190** may be mirrored or switched. In other embodiments, components may be moved relative to one another and/or relative to deck **122.** Positioning of the components of the deck as described herein may mitigate damage and/or poor performance from dust, dirt, mud, and/or other environmental considerations. Furthermore, placement of such components on deck **122** in combination with mounting of battery pack module **176,** hydraulic liquid tank **184,** and second liquid tank **186** in respective side saddles **166, 170** facilitates weight balance of mining truck **100.** However, other placements are within the scope of the disclosure.

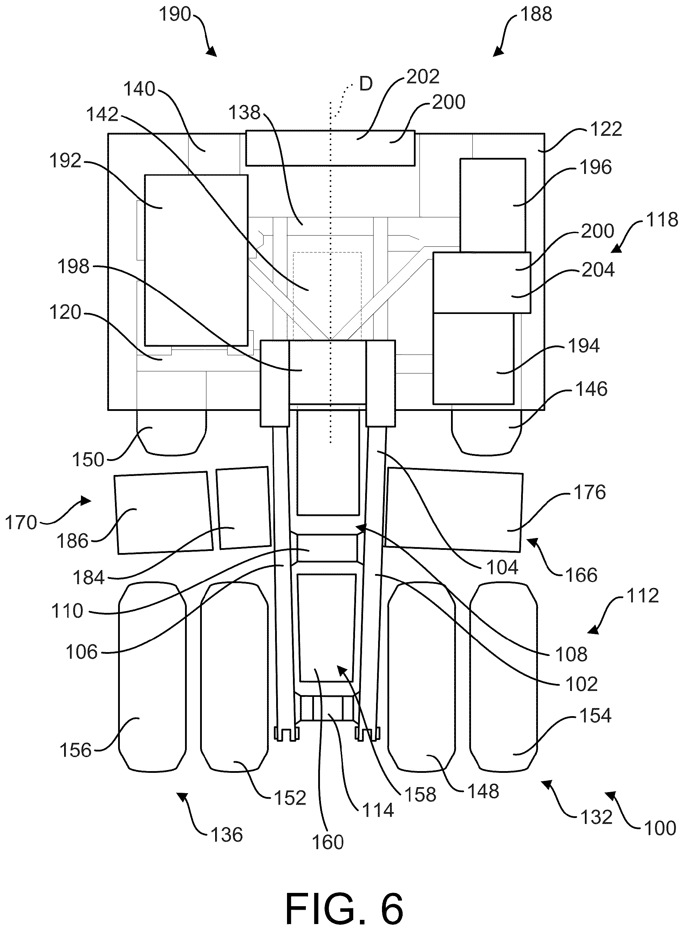

Now referring to FIG. **6****,** another exemplary architecture for mining truck **100** is illustrated. Mining truck **100** as illustrated in FIG. **6** includes the same components and details as described in relation to FIGS. **1-5** except as described further herein, with like components associated with like reference numbers.

Resistor grid **194** may be arranged within first region **188** of deck **122** and may be positioned at a generally rearward position of first region **188** of deck **122.** DC/DC-battery thermal manager **204** may be positioned forward of resistor grid **194,** with DC/DC system **196** positioned forward of DC/DC-battery thermal manager **204,** so that DC/DC-battery thermal manager **204** is positioned generally between resistor grid **194** and DC/DC system **196.** The positioning of the components herein provides access to service panels on top of resistor grid **194,** while further accounting for positioning of DC/DC-battery thermal manager **204** in an efficient position relative to DC/DC system **196** and battery pack module **176** mounted within first side saddle **166.** The arrangement of components as described in relation to FIG. 6 may also mitigate interference with line-of-sight to side mirrors (not shown) of mining truck **100** from operator cab **192** positioned within second region **190** of deck **122.** The arrangement of components on the deck as described herein are exemplary in nature and may be altered within the scope of the disclosure. For example, in some embodiments, first region **188** and second region **190** may be mirrored or switched. In other embodiments, components may be moved relative to one another and/or relative to deck **122.**

Positioning of the components of the deck as described herein may mitigate damage and/or poor performance from dust, dirt, mud, and/or other environmental considerations. Furthermore, placement of such components on deck **122** in combination with mounting of battery pack module **176,** hydraulic liquid tank **184,** and second liquid tank **186** in respective side saddles **166, 170** facilitates weight balance of mining truck **100.** However, other placements are within the scope of the disclosure.

The arrangement of components on the deck as described herein are exemplary in nature and may be altered within the scope of the disclosure. For example, in some embodiments, first region **188** and second region **190** may be mirrored or switched. In other embodiments, components may be moved relative to one another and/or relative to deck **122.**

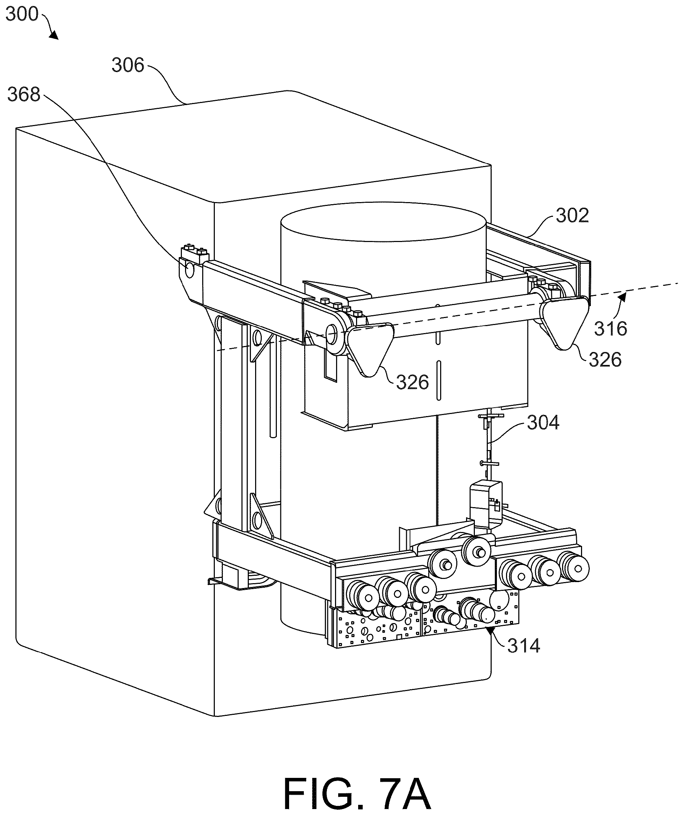

FIG. **7A** shows an isometric view of the storage tank assembly **300** according to embodiments of the present disclosure. Storage tank assembly **300** may include support structure **302**, interior storage tank **304**, and exterior storage tank **306**. In some embodiments, interior storage tank **304** may be identical or substantially similar to hydraulic liquid tank **184** (FIG. **3****).** In some embodiments, interior storage tank **304** may be a hydraulic liquid tank which is conventional in design. In other words, interior storage tank **304** may be a preexisting tank that is not required to be substantially changed in structure to be mounted to support structure **302** as described further herein. In such embodiments, for example, interior storage tank **304** may be cylindrical in shape. In other embodiments, interior storage tank **304** may be of a new design that is a cylindrical shape or an alternative shape, such as rectangular. Tank connections **314** provide an interface for fluid transfer between interior storage tank **304** and mining truck **100.**

In some embodiments, exterior storage tank **306** may be identical or substantially similar to second liquid tank **186** (FIG. **3****).** Storage tank assembly **300** is supported by mounting posts **326.** While FIG. **7A** illustrates storage tank assembly **300** having exterior storage tank **306** (e.g., a fuel tank), in some embodiments, exterior storage tank **306** may be replaced with an alternate energy storage system, such as a battery or a flywheel. In some embodiments, storage tank assembly **300** may facilitate mounting of exterior storage tank **306** relative to mining truck **100** at a position in which exterior storage tank **306** was not capable of previously being mounted. Exterior storage tank **306** may, in some embodiments, be a tank of conventional design that is not required to be substantially changed in structure to be mounted to support structure **302** as described further herein. In other embodiments, exterior storage tank **306** may be new in design.

Furthermore, while the tanks described herein are described as "interior storage tank" and "exterior storage tank" in reference to their relative positions to chassis **102,** it is understood that, in some embodiments, the position of each storage tank to chassis **102** may be altered. For example, in some embodiments, each of interior storage tank **304** and exterior storage tank **306** may be positioned adjacent to chassis **102** with one of interior storage tank **304** and exterior storage tank **306** being positioned at a forward position of chassis **102** relative to the other storage tank and the other of interior storage tank **304** and exterior storage tank **306** being positioned at a rearward position of chassis relative to the other storage tank.

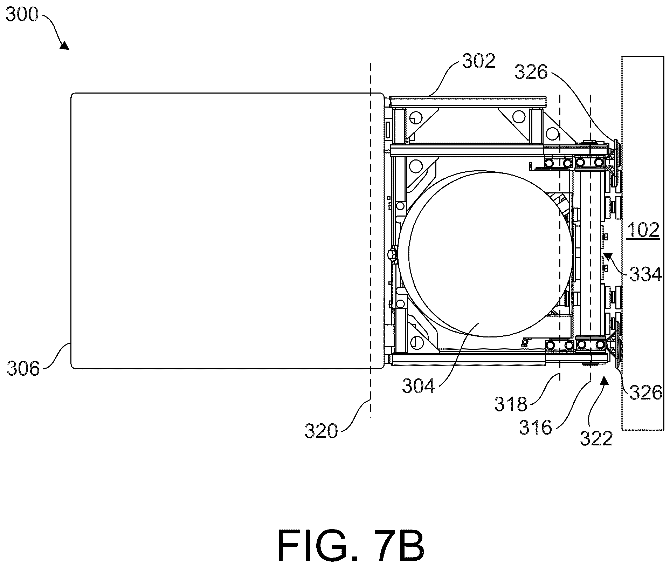

FIG. **7B** shows a top view of storage tank assembly **300** of FIG. **7A****.** As shown, support structure **302** may support interior storage tank **304** adjacent to chassis **102** of mining truck **100** (FIG. **3****)** and between chassis **102** and exterior storage tank **306**. Additionally, support structure **302** may support exterior storage tank **306** adjacent to interior storage tank **304**.

Support structure **302** may attach to chassis **102** via interior mounting interface **322.** For example, pivot member **334** of interior mounting interface **322** may be configured to be positioned onto chassis mounting posts **326** in a mounted configuration of support structure **302**. Mounting posts **326** may be configured to be attached (e.g., welded, cast, molded, adhered, bolted, or otherwise coupled or bonded to) to chassis **102.** In some embodiments, storage tank assembly **300** may be mounted to chassis **102** within second side saddle **170** (FIG. 3).

FIG. **7B** further shows interior pivot axis **316,** about which storage tank assembly **300** may pivot relative to chassis **102;** center pivot axis **318,** about which interior storage tank **304** may pivot relative to support structure **302;** and exterior pivot axis **320,** about which exterior storage tank **306** may pivot relative to support structure **302**. As described further herein, interior storage tank **304** may pivot relative to support structure **302** independently of exterior storage tank **306,** and exterior storage tank **306** may pivot relative to support structure **302** independently of interior storage tank **304**. In some embodiments, interior storage tank **304** may be configured to be positioned directly onto chassis mounting posts **326.** Such embodiments may or may not include exterior storage tank **306** mounted adjacent to interior storage tank **304**.

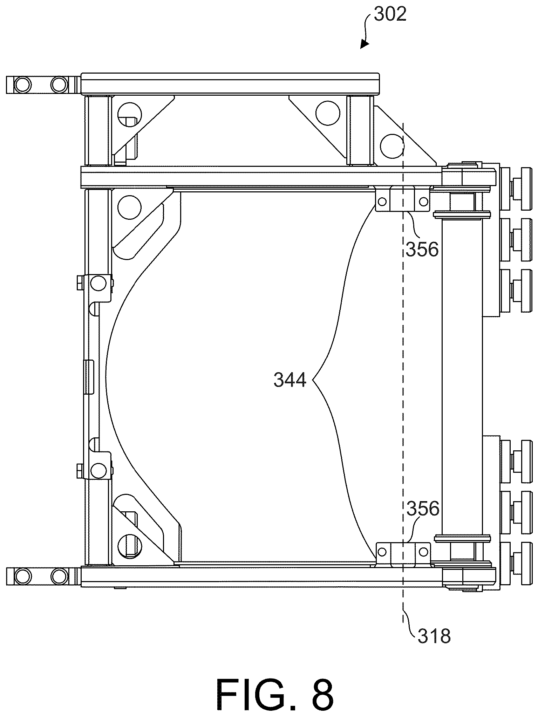

In other embodiments, as illustrated in FIG. **8****,** support structure **302** may include support tabs **344** and slots **356** to define center pivot axis **318.** In other words, center pivot axis **318** may pass through a center of each of the support tabs **344,** which may be designed to mimic the structure and function of chassis mounting posts **326,** such that interior storage tank **304** may be positioned onto support tabs **344** in a manner similar to the manner with which interior storage tank **304** may be positioned onto chassis mounting posts **326.** Additionally, pivot member **334** may be designed to mimic the structure and function of mounting portions of interior storage tank **304**, such that support structure **302** may be positioned onto chassis mounting posts **326** in a manner similar to the manner with which interior storage tank **304** may be positioned onto chassis mounting posts **326.**

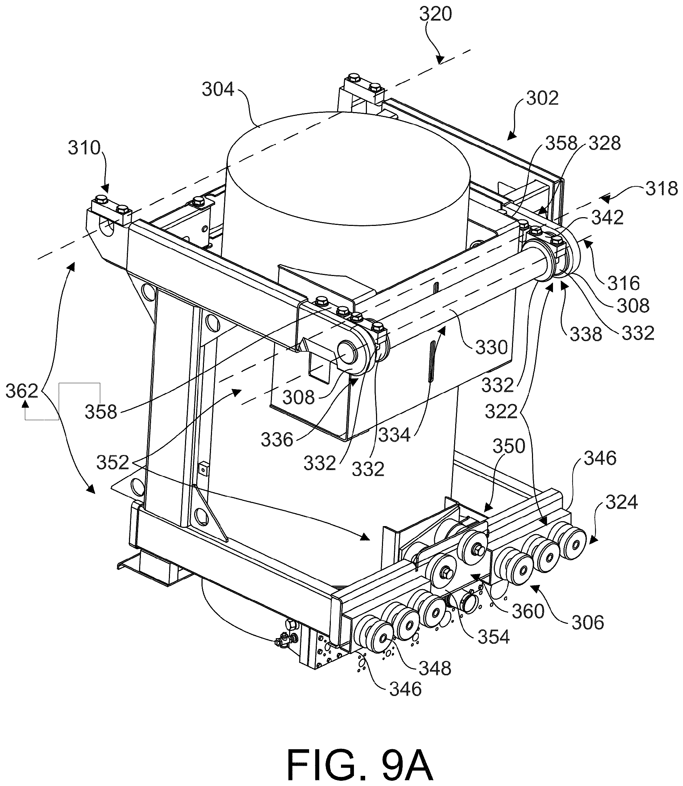

FIG. **9A** shows an isometric view of interior storage tank **304** mounted to support structure **302**. Support structure **302** may include interior mounting interface **322** configured to removably attach support structure **302** to chassis **102** (FIG. **7B****).** Interior mounting interface **322** may facilitate vibrational isolation of both interior storage tank **304** and exterior storage tank **306** from chassis **102** of mining truck **100.** For example, interior mounting interface **322** may include pivot member **334** and interior damping portion **324.** Pivot member **334** permits the assembly of support structure **302**, interior storage tank **304**, and/or exterior storage tank **306** (FIG. **7A****)** to pivot about interior pivot axis **316** relative to chassis **102** (FIG. **7B****).**

Additionally, interior damping portion **324** may prevent or reduce a transmission of vibration between chassis **102** (FIG. **7B****)** and support structure **302**. By this combination of pivoting structure and damping structure, interior mounting interface **322** may provide vibrational isolation and thereby improve the durability of support structure **302**. In an example, such vibrational isolation may reduce one or more loads on welds and joints of support structure **302**. Similarly, as discussed below, in some embodiments, center mounting interface **352** may be configured to permit pivoting and damped motion of interior storage tank **304** relative to support structure **302**. In some embodiments, exterior mounting interface **362** may be configured to permit pivoting and damped motion of exterior storage tank **306** relative to support structure **302**. Such embodiments may additionally reduce one or more loads on welds and joints of support structure **302**. In some embodiments, the pivoting structure discussed above may provide vibrational isolation without including dampers (i.e., damping portion **324)** due to the ability of each of interior storage tank **304** and exterior storage tank **306** to pivot relative to chassis **102** and/or support structure **302** independently of each other as described further herein.

Pivot member **334** of interior mounting interface **322** may include crossbar **330** having interior pivot axis **316** so that support structure **302** is pivotable about interior pivot axis **316** relative to chassis **102.** Pivot member **334** may further include a pair of interior bar members **308** attached to crossbar **330** so that one interior bar member **308** is positioned at each of a proximal side **336** and a distal side **338** of crossbar **330**. Crossbar **330** may include a set of flanges **332** at each of a proximal side **336** and a distal side **338** of crossbar **330**.

In mounting pivot member **334** to chassis **102,** crossbar **330** may be positioned onto chassis mounting posts **326** (FIG. **7A****)** such that a chassis mounting post **326** (FIG. **7A****)** fits between flanges **332** at the proximal side **336** of crossbar **330**, and a chassis mounting post **326** fits between flanges **332** at the distal side **338** of crossbar **330**. Interior clamping members **342** may attach to chassis mounting posts **326** via fasteners **328** at each of the proximal side **336** and the distal side **338** of crossbar **330**. Accordingly, in a mounted configuration of support structure **302**, portions of crossbar **330** between flanges **332** may be sandwiched between interior clamping members **342** and chassis mounting posts **326.** Thus, in the mounted configuration of support structure **302**, interior clamping members **342,** chassis mounting posts **326,** and flanges **332** may restrict translational motion of support structure **302** relative to chassis **102.** Additionally, in the mounted configuration of support structure **302**, interior clamping members **342,** chassis mounting posts **326,** and flanges **332** may permit rotational motion (e.g., pivoting) of support structure **302** relative to chassis **102.**

Interior damping portion **324** of interior mounting interface **322** may, in some embodiments, include damping brackets **346** to which interior vibration dampers **307** may be mounted. Interior vibration dampers **307** may prevent or reduce a transmission of vibration between chassis **102** and support structure **302**. In some embodiments, interior vibration dampers **307** may include materials such as rubber, polyurethane, nitrile, nylon, silicone, ethylene propylene diene monomer ("EPDM"), and/or polyvinyl chloride. In some embodiments, in a mounted configuration of support structure **302**, interior vibration dampers **307** may be positioned in pairs, such that a plate of the chassis **102** may be sandwiched between a pair of vibration dampers. In this way, interior vibration dampers **307** may absorb vibration energy in response to support structure **302** moving toward chassis **102** and/or in response to support structure **302** moving away from chassis **102.** In some embodiments, interior vibration dampers **307** may include a mounting hole **348** through which a fastener (e.g., a bolt) may be inserted to removably attach support structure **302** and interior vibration dampers **307** to chassis **102.**

Referring again briefly to FIG. **8****,** center mounting interface **352** may be configured to removably attach interior storage tank **304** to support structure **302**. Center mounting interface **352** may include support tabs **344** and, in some embodiments, center damping portion **350**. Support tabs **344** may include slots **356** defining center pivot axis **318** so that center pivot axis **318** passes through slots **356.** Interior storage tank **304** may be positioned onto support tabs **344** such that mounting portions (not shown) of interior storage tank **304** are inserted into slots **356** so that interior storage tank **304** is supported and configured to pivot about center pivot axis **318** relative to support structure **302**.

Referring again to FIG. **9A****,** center clamping members **358** may attach to support tabs **344** via fasteners **328.** Accordingly, in a mounted configuration of interior storage tank **304**, mounting portions of interior storage tank **304** may be sandwiched between support tabs **344** and center clamping members **358.** Thus, in the mounted configuration of interior storage tank **304**, interior bar members **308**, support tabs **344** of interior bar members **308**, and center clamping members **358** may restrict translational motion of interior storage tank **304** relative to support structure **302**. Additionally, in the mounted configuration of interior storage tank **304**, interior bar members **308**, support tabs **344** of interior bar members **308**, and center clamping members **358** may permit rotational motion (e.g., pivoting) of interior storage tank **304** relative to support structure **302**.

In some embodiments, center damping portion **350** may include center damping plate **354** and center vibration dampers **360** that may be mounted to center damping plate **354.** Center vibration dampers **360** may prevent or reduce a transmission of vibration between interior storage tank **304** and support structure **302**. In some embodiments, center vibration dampers **360** may be the same or substantially similar to interior vibration dampers **307**. In some embodiments, in a mounted configuration of interior storage tank **304**, center vibration dampers **360** may be positioned in pairs, such that center damping plate **354** may be sandwiched between a pair of center vibration dampers **360**. In this way, center vibration dampers **360** may absorb vibration energy in response to interior storage tank **304** moving toward center damping plate **354** and/or in response to interior storage tank **304** moving away from center damping plate **354.** In some embodiments, center vibration dampers **360** may include a mounting hole through which a fastener (e.g., a bolt) may be inserted to removably attach interior storage tank **304** and center vibration dampers **360** to center damping plate **354** of support structure **302**. As discussed above and further herein, some embodiments may not include center damping portion **350** and/or center damping plate **354** and/or center vibration dampers **360**.

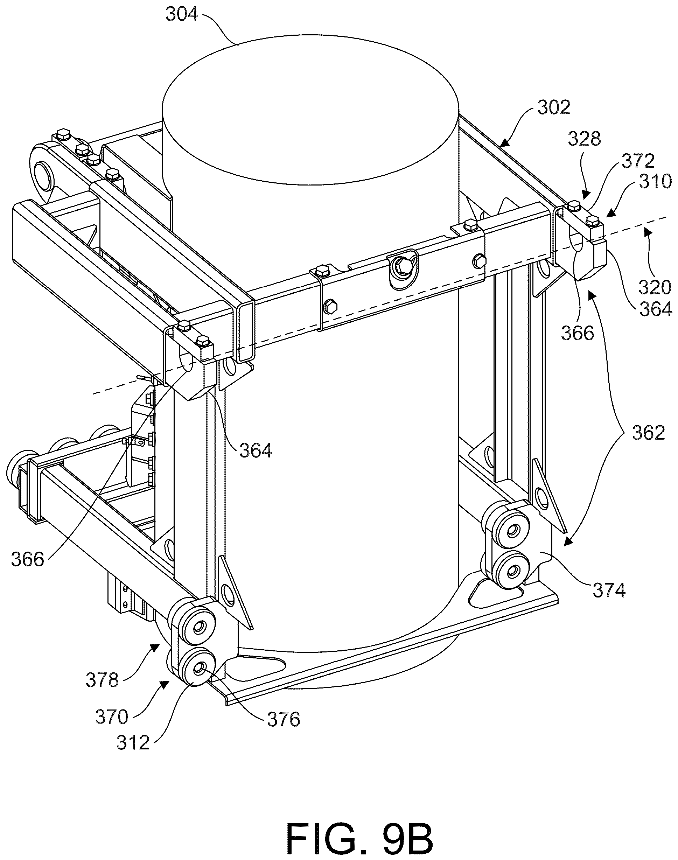

FIG. **9B** shows an additional isometric view of interior storage tank **304** and support structure **302** of FIG. **9A****.** As shown, exterior mounting interface **362** may be configured to removably attach exterior storage tank **306** (FIG. **7B****)** to support structure **302** adjacent to interior storage tank **304**. Exterior mounting interface **362** may include exterior bar members **364** and lower interface **370.**

Exterior bar members **364** may include slot portions **366** defining an exterior pivot axis **320** passing through slot portions **366.** Exterior storage tank **306** may be positioned onto exterior bar members **364** such that mounting tabs **368** (FIG. **7A****)** of exterior storage tank **306** fit into slot portions **366.** In this way, slot portions **366** may support exterior storage tank **306** such that exterior storage tank **306** may pivot about exterior pivot axis **320** relative to support structure **302**.

Exterior clamping members **372** (FIG. **9B****)** may attach to exterior bar members **364** via fasteners **328.** Accordingly, in a mounted configuration of exterior storage tank **306,** mounting tabs **368** of exterior storage tank **306** may be sandwiched between exterior bar members **364** and exterior clamping members **372.** Thus, in the mounted configuration of exterior storage tank **306,** exterior bar members **364** and exterior clamping members **372** may restrict translational motion of exterior storage tank **306** relative to support structure **302**. Additionally, in the mounted configuration of exterior storage tank **306,** exterior bar members **364** and exterior clamping members **372** may permit rotational motion (e.g., pivoting) of exterior storage tank **306** relative to support structure **302**.

Lower interface **370** may be configured to contact and removably attach to a lower portion of exterior storage tank **306** (FIG. **7A****).** For example, lower interface **370** may include one or more contact plates **374** and/or one or more exterior vibration dampers **312,** the assembly of such components forming an exterior damping portion **378.** In such embodiments, exterior vibration dampers **312** may prevent or reduce a transmission of vibration between exterior storage tank **306** and support structure **302**. In some embodiments, exterior vibration dampers **312** may be the same or substantially similar to interior vibration dampers **307**. In some embodiments, contact plates **374** and/or exterior vibration dampers **312** may include an exterior mounting hole **376** through which a fastener (e.g., a bolt) may be inserted to removably attach exterior storage tank **306** and, in some instances, exterior vibration dampers **312,** to contact plates **374** of support structure **302**. In some embodiments, exterior storage tank **306** may be removably attached to contact plates **374** without vibration dampers **307**.

For example, the mounting of the exterior storage tank **306** to support structure **302** as described herein may facilitate transmission of load to a primary damping system at the interface between mining truck **100** and storage tank assembly **300**, helping to balance some of the load at the interface between storage tank **306** and support structure **302**. Such relationship and transfer of load may mitigate or eliminate the need for additional structures, e.g., vibration damper(s), being included with support structure **302**.

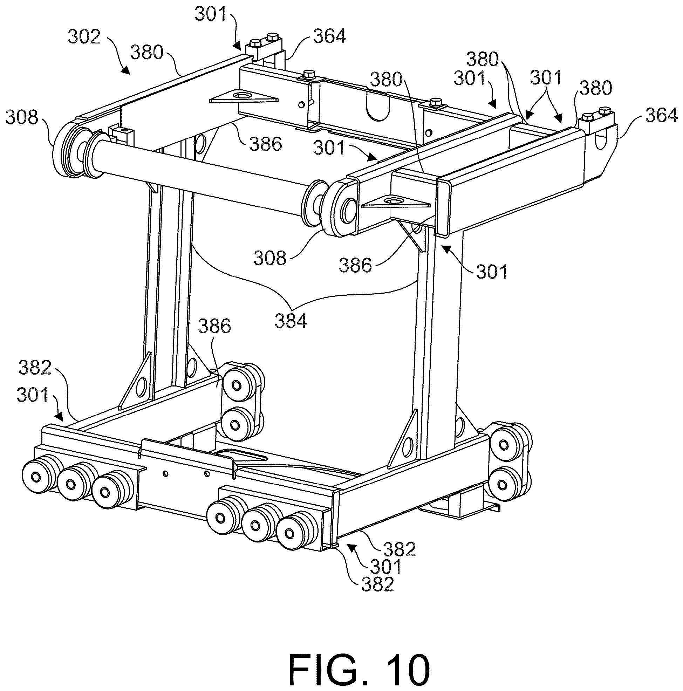

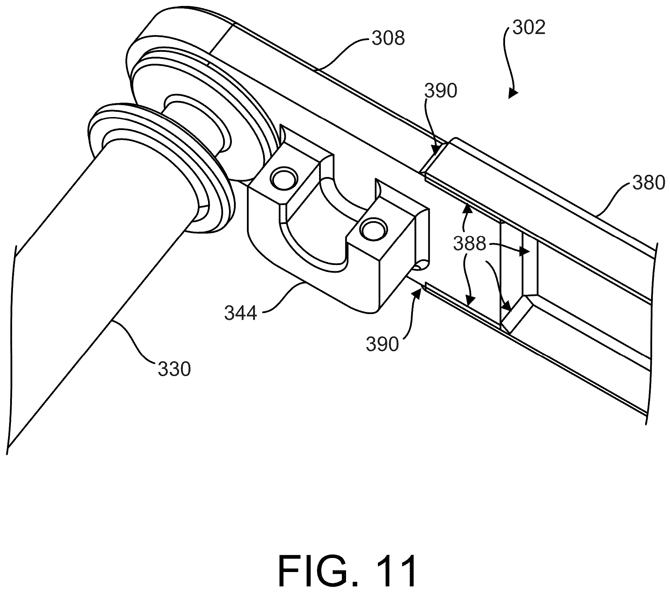

As discussed above, embodiments of the present disclosure may provide durability and a high strength-to-weight ratio. For example, FIG. **10** shows support structure **302** having a plurality of upper beams **380** and lower beams **382** attached by middle beams **384.** FIG. **10** additionally shows a plurality of joints **301** where upper beams **380** may be attached to one another and lower beams **382** may be attached to one another. In some embodiments, such beams may be formed from a channel (e.g., steel C-channel), permitting such beams to have a reduced weight relative to beams having a rectangular cross section (e.g., steel bar). Such embodiments may further include stiffening plates and portions formed of bar material to increase strength and durability. For example, support structure **302** may include a plurality of stiffening plates **386** and bar-material portions (e.g., interior bar members **308** and exterior bar members **364).** Such bar-material portions may be attached to upper beams **380** and/or lower beams **382** by inside and outside welds, as exemplified in the discussion of FIG. **11** below.

Referring to FIG. **11****,** crossbar **330**, interior bar member **308** having support tab **344,** and upper beam **380** in the form of a C-channel is illustrated. By including interior bar member **308** attached to (e.g., welded to) crossbar **330**, support structure **302** may provide an assembly having increased strength relative to an assembly in which upper beam **380** is attached directly to crossbar **330**. Additionally, as shown in FIG. **11****,** a portion of upper beam **380** may overlap a portion of interior bar member **308**. By this configuration, a plurality of inside welds **388** and a plurality of outside welds **390** may be formed to attach interior bar member to **308** upper beam **380**. By including inside welds **388** and outside welds **390**, the shown configuration may provide increased binding strength between interior bar member **308** and upper beam **380** relative to a configuration in which only outside welds **390** were used to bind those components. Such increased binding strength may improve the durability of support structure **302** by reducing a likelihood of weld failure.

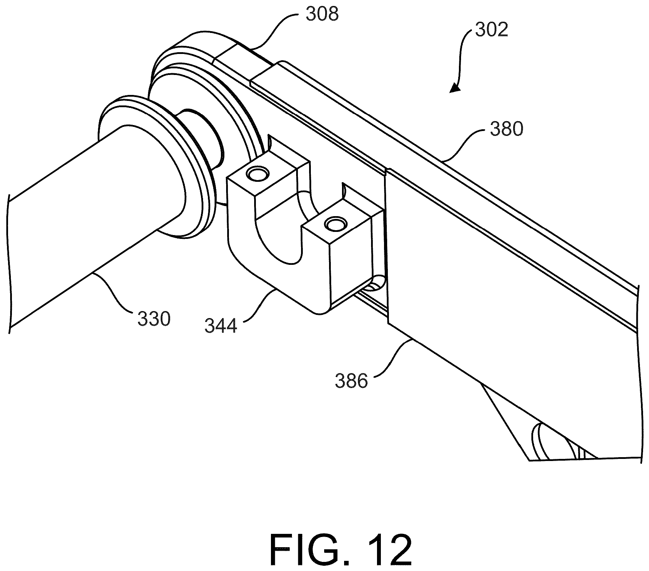

The configuration of inside welds **388** and outside welds **390** discussed with respect to FIG. **11** may be applied in an identical or substantially similar manner to attach other bar-member portions (e.g., exterior bar members **364,** FIG. **10****)** to upper beams **380** (FIG. **10****).** As discussed with respect to FIG. **12** below, embodiments of the present disclosure may further include one or more stiffening plates **386** (FIG. **10****).**

Referring to FIG. **12****,** crossbar **330**, interior bar member **308** having support tab **344,** upper beam **380** in the form of a C-channel, and stiffening plate **386** are illustrated, according to embodiments of the present disclosure. This configuration permits the use of inside welds **388** and outside welds **390** as discussed with respect to FIG. **11****.** This configuration may additionally include stiffening plate **386** that may be attached (e.g., welded) to upper beam **380** such that stiffening plate **386** overlaps and covers one or more inside welds. Embodiments of the present disclosure including stiffening plate **386** may provide additional durability by increasing the stiffness of upper beam **380**. As shown in FIG. **10****,** such stiffening plates may be applied in a plurality of positions on support structure **302**.

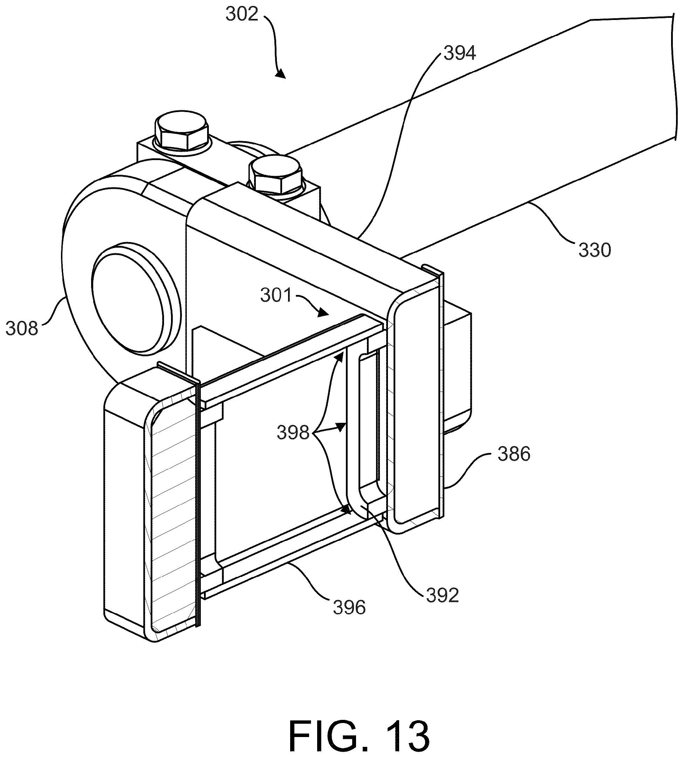

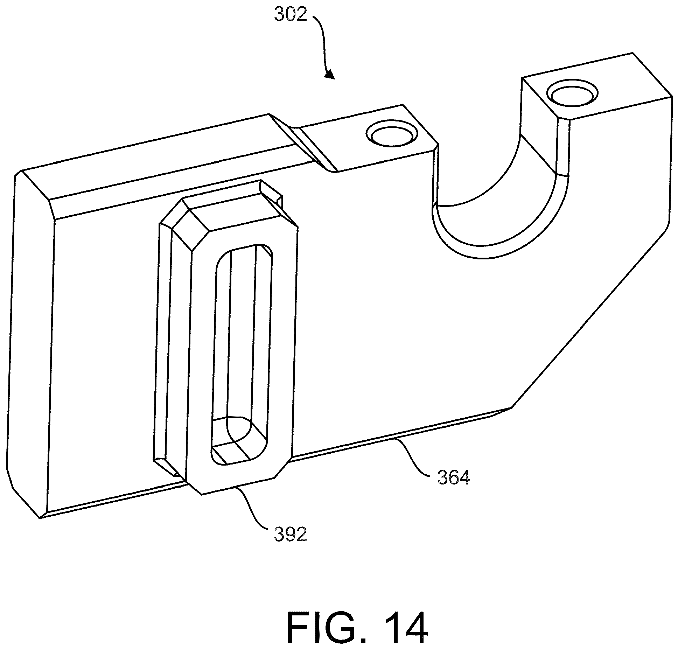

FIGS. **13** and **14** show an additional strengthening feature according to embodiments of the present disclosure. For example, FIG. **13****,** illustrates a configuration of interior bar member **308**, first upper beam **394,** second upper beam **396,** stiffening plate **386,** and crossbar **330**. As shown, a portion of first upper beam **394** may overlap a portion of interior bar member **308** in a manner similar to that discussed with respect to FIG. **11****.** Additionally, interior bar member **308** may further includes a joint tab **392.** Joint tab **392** is a protrusion (e.g., a boss) sized to fit within a channel (e.g., second upper beam **396).** Joint tab **392** may provide a plurality of areas **398** for incorporation with inside welds for bonding components together (e.g., for bonding interior bar member **308** to second upper beam **396).** By this configuration, embodiments of the present disclosure may provide additional strength at joints (e.g., joint **301)** of support structure **302**.

Now referring to FIG. **14****,** exterior bar member **364** may include a joint tab **392** as discussed with respect to FIG. **13****.** Such joint tabs **392** may be formed on one or more bar members (e.g., exterior bar member **364)** of support structure **302** to facilitate incorporation of inside welds at joints **301** of support structure **302**. Thus, embodiments of the present disclosure may provide increased strength at joints **301** of support structure **302** and thereby improve the durability of support structure **302**.

Various modifications and additions may be made to the exemplary embodiments discussed without departing from the scope of the disclosed subject matter. For example, while the embodiments described above refer to particular features, the scope of this disclosure also includes embodiments having different combinations of features and embodiments that do not include all of the described features. Accordingly, the scope of the disclosed subject matter is intended to embrace all such alternatives, modifications, and variations as fall within the scope of the claims, together with all equivalents thereof.

Aspect 1 is a support structure for a mining truck, the support structure comprising: an interior mounting interface configured to removably attach the support structure to a chassis of the mining truck; a center mounting interface configured to support an interior storage tank adjacent to the chassis; and an exterior mounting interface configured to support an exterior storage tank adjacent to the interior storage tank.

Aspect 2 is the support structure of Aspect 1, wherein: the interior mounting interface comprises an interior pivot axis about which the support structure is pivotable relative to the chassis; the center mounting interface comprises a center pivot axis about which the interior storage tank is pivotable relative to the support structure; and the exterior mounting interface comprises an exterior pivot axis about which the exterior storage tank is pivotable relative to the support structure.

Aspect 3 is the support structure of Aspect 2, wherein each of the interior mounting interface, the center mounting interface, and the exterior mounting interface is pivotable independently of each other.

Aspect 4 is the support structure of Aspect 1, wherein each of the interior mounting interface, the center mounting interface, and the exterior mounting interface includes a damping portion having one or more vibration dampers.

Aspect 5 is the support structure of Aspect 1, further comprising an upper beam extending between the interior mounting interface and the exterior mounting interface, wherein: the upper beam comprises a channel having a first end and a second end; the interior mounting interface comprises an interior bar member attached to the first end; and the exterior mounting interface comprises an exterior bar member attached to the second end.

Aspect 6 is the support structure of Aspect 5, wherein: a first portion of the upper beam overlaps a portion of the interior bar member; and a second portion of the upper beam overlaps a portion of the exterior bar member.

Aspect 7 is the support structure of Aspect 5, wherein the interior bar member and the exterior bar member are welded to the upper beam.

Aspect 8 is the support structure of Aspect 1, wherein one of the interior storage tank and the exterior storage tank comprises a hydraulic fluid storage tank.

Aspect 9 is the support structure of Aspect 1, wherein one of the interior storage tank and the exterior storage tank comprises at least one of a fuel tank, a battery module, and a flywheel.

Aspect 10 is a storage tank assembly for a mining truck, the storage tank assembly comprising: a support structure pivotably coupled to a chassis of the mining truck; an interior storage tank supported by and pivotably coupled to the support structure; and an exterior storage tank supported by and pivotably coupled to the support structure; wherein the interior storage tank is pivotable relative to the support structure independently of the exterior storage tank; and wherein the exterior storage tank is pivotable relative to the support structure independently of the interior storage tank.

Aspect 11 is the storage tank assembly of Aspect 10, wherein the interior storage tank is vibrationally isolated from the support structure.

Aspect 12 is the storage tank assembly of Aspect 10, wherein the exterior storage tank is vibrationally isolated from the support structure.

Aspect 13 is the storage tank assembly of Aspect 10, further comprising one or more vibration dampers between at least one of: the support structure and the chassis; the interior storage tank and the support structure; and the exterior storage tank and the support structure.

Aspect 14 is the storage tank assembly of Aspect 10, wherein the support structure includes a crossbar defining a pivot axis about which the support structure is configured to pivot, the crossbar received between a chassis mounting post of the chassis and a clamping member coupled to the chassis mounting post so that the crossbar is freely rotatable.

Aspect 15 is a method of mounting a first storage tank and a second storage tank to a chassis of a mining truck, comprising: mounting a support structure to a mounting post of the chassis of the mining truck; mounting a pre-existing storage tank to a center mounting interface of the support structure; and mounting a second storage tank to an exterior mounting interface of the support structure so that the second storage tank is positioned adjacent to the pre-existing storage tank.

Aspect 16 is the method of Aspect 15, wherein the support structure is pivotably mounted to the mounting post of the chassis by an interior mounting interface about a first pivot axis; the pre-existing storage tank is pivotable relative to the chassis about a second pivot axis; and the second storage tank is pivotable relative to the chassis about a third pivot axis.

Aspect 17 is the method of Aspect 16, wherein the pre-existing storage tank is pivotable independently of the second storage tank and the second storage tank is pivotable independently of the pre-existing storage tank.

Aspect 18 is the method of Aspect 15, wherein the pre-existing storage tank is cylindrical.

Aspect 19 is the method of Aspect 15, wherein mounting the support structure includes receiving a crossbar of the support structure between the mounting post of the chassis and a clamping member so that the crossbar is freely rotatable.

Aspect 20 is the method of Aspect 15, wherein mounting the pre-existing storage tank includes receiving a portion of the pre-existing storage tank within a slot defined by a support tab of the support structure and coupling a clamping member to the support tab so that the portion of the pre-existing storage tank is positioned between the support tab and the clamping member.

## Claims

1. A support structure for a mining truck, the support structure comprising:
an interior mounting interface configured to removably attach the support structure to a chassis of the mining truck;
a center mounting interface configured to support an interior storage tank adjacent to the chassis; and
an exterior mounting interface configured to support an exterior storage tank adjacent to the interior storage tank.

2. The support structure of claim 1, wherein:
the interior mounting interface comprises an interior pivot axis about which the support structure is pivotable relative to the chassis;
the center mounting interface comprises a center pivot axis about which the interior storage tank is pivotable relative to the support structure; and
the exterior mounting interface comprises an exterior pivot axis about which the exterior storage tank is pivotable relative to the support structure.

3. The support structure of claim 2, wherein each of the interior mounting interface, the center mounting interface, and the exterior mounting interface are pivotable independently of each other.

4. The support structure of any preceding claim, wherein each of the interior mounting interface, the center mounting interface, and the exterior mounting interface includes a damping portion having one or more vibration dampers.

5. The support structure of any preceding claim, further comprising an upper beam extending between the interior mounting interface and the exterior mounting interface, wherein:
the upper beam comprises a channel having a first end and a second end;
the interior mounting interface comprises an interior bar member attached to the first end; and
the exterior mounting interface comprises an exterior bar member attached to the second end.

6. The support structure of claim 5, wherein:
a first portion of the upper beam overlaps a portion of the interior bar member; and
a second portion of the upper beam overlaps a portion of the exterior bar member.

7. The support structure of claim 5 or 6, wherein the interior bar member and the exterior bar member are welded to the upper beam.

8. The support structure of any preceding claim, wherein one of the interior storage tank and the exterior storage tank comprises at least one of a hydraulic fluid storage tank, a fuel tank, a battery module, and a flywheel.

9. A storage tank assembly for a mining truck, the storage tank assembly comprising:
the support structure of any preceding claim pivotably coupled to a chassis of the mining truck;
an interior storage tank supported by and pivotably coupled to the support structure; and
an exterior storage tank supported by and pivotably coupled to the support structure;
wherein the interior storage tank is pivotable relative to the support structure independently of the exterior storage tank; and
wherein the exterior storage tank is pivotable relative to the support structure independently of the interior storage tank.

10. The storage tank assembly of claim 9, wherein the interior storage tank and/or the exterior storage tank are vibrationally isolated from the support structure.

11. The storage tank assembly of claim 9 or 10, wherein the support structure includes a crossbar defining a pivot axis about which the support structure is configured to pivot, the crossbar received between a chassis mounting post of the chassis and a clamping member coupled to the chassis mounting post so that the crossbar is freely rotatable.

12. A method of mounting a first storage tank and a second storage tank to a chassis of a mining truck, comprising:
mounting a support structure to a mounting post of the chassis of the mining truck;
mounting a pre-existing storage tank to a center mounting interface of the support structure; and
mounting a second storage tank to an exterior mounting interface of the support structure so that the second storage tank is positioned adjacent to the pre-existing storage tank.

13. The method of claim 12, wherein:
the support structure is pivotably mounted to the mounting post of the chassis by an interior mounting interface about a first pivot axis;
the pre-existing storage tank is pivotable relative to the chassis about a second pivot axis; and
the second storage tank is pivotable relative to the chassis about a third pivot axis.

14. The method of claim 12 or 13, wherein the pre-existing storage tank is pivotable independently of the second storage tank and the second storage tank is pivotable independently of the pre-existing storage tank, wherein the pre-existing storage tank is preferably cylindrical.

15. The method of any of claims 12 to 14, wherein mounting the support structure includes receiving a crossbar of the support structure between the mounting post of the chassis and a clamping member so that the crossbar is freely rotatable; and/or
mounting the pre-existing storage tank includes receiving a portion of the pre-existing storage tank within a slot defined by a support tab of the support structure and coupling a clamping member to the support tab so that the portion of the pre-existing storage tank is positioned between the support tab and the clamping member.
